# EUROPEAN PATENT APPLICATION

(11) **EP 2 640 151 A1**
(43) Date of publication of application: **18.09.2013**
(21) Application number: 10859584.4
(22) Date of filing: 11.11.2010
(51) Int. Cl.: H04W 76/02

(54) **COMMUNICATION SYSTEM, COMMUNICATION METHOD, BASE STATION DEVICE, AND COMMUNICATION DEVICE**

(71) Applicant: Fujitsu Limited, Kawasaki-shi, Kanagawa 211-8588 (JP)
(72) Inventor: ANBE, Michiko, Kawasaki-shi Kanagawa 211-8588 (JP)
(74) Representative: Schultes, Stephan
(86) International application number: PCT/JP2010/070134
(87) International publication number: WO 2012/063350

(57) **Abstract**

It is made easier for a terminal device for which it is desired that a connection be preferentially established with a base station to establish a connection with the base station. A first terminal device transmits a first preamble signal representing a first value to the base station. A second terminal device transmits a second preamble signal representing a second value to the base station. The base station identifies the first and second value when the base station has received the first and second preamble signal. The base station compares a threshold with the first value, and compares the threshold with the second value. The base station gives priority to establishment of a connection with the first terminal device over establishment of a connection with the second terminal device when the first value is greater than the threshold and the second value is equal to or smaller than the threshold.

## Description

### FIELD

The embodiments described herein are related to a wireless communication.

### BACKGROUND

In order to start communication with a base station, terminal devices transmit preamble signals to a base station through a Random Access Channel (RACH). As an example, a case will be described where communication starts between a base station and a terminal device operating in accordance with Long Term Evolution (LTE), which is a service scheduled to begin service soon. A terminal device transmits a preamble signal to a base station through a Physical Random Access Channel (PRACH). The base station obtains an index value corresponding to the received preamble signal. The base station makes a RACH response message include an index value corresponding to the preamble signal received from a communication target terminal device, and broadcasts the message to terminal devices in a cell covered by the base station. Each terminal device compares the value detected from the RACH response message with the index corresponding to the preamble signal that it has transmitted to the base station. When they are equal to each other, the terminal device transmits to the base station an RRC connection request (or Radio Resource Control Connection Request) message, an RRC connection reestablishment request (or Radio Resource Control Connection Reestablishment), or an RRC connection reconfiguration complete (or Radio Resource Control Connection Reconfiguration Complete). When the terminal device receives an RRC Connection setup from the base station, an RRC connection is established between the base station and the terminal device.

When congestion has occurred in an event such as a disaster, many terminal devices transmit preamble signals to one base station in a short period of time, sometimes leading to a situation where some terminal devices are not allowed to establish connections with the base station. However, when a disaster has occurred, prompt communication is preferable between policemen, fire fighters, ambulance crews, etc., and accordingly it is desirable that terminal devices used by policemen, etc. be given priority as to establishing connections with base stations even under congestion. Accordingly, a method has been invented by which terminal devices having priority are allowed to establish connections with base stations preferentially even under congestion.

For example, a method has been invented by which whether or not each terminal device that has established an RRC connection with a base station has priority is judged, and communication is performed between the base station and a terminal device that has been judged to have priority. Also, a method is discussed by which a base station rejects accesses from terminal devices not having priority by using information for controlling accesses transmitted in advance by the base station. Further, a configuration is also discussed in which terminal devices having priority and terminal devices not having priority use separate PRACHs.

As a related technique, a method has been proposed in which identification information is reported to a base station by using preamble transmission when a terminal device uses a RACH, and the base station assigns wireless resources for data transmission to terminal devices in accordance with the identification information. Also, a system is known in which a base station reports to a terminal device a signature to be used for a next preamble when the base station rejects a communication-starting request from the terminal device. In this system, a base station returns a request permission signal preferentially to mobile terminals that have transmitted preamble signals including specified signatures.
Patent Document 1: Japanese Laid-open Patent Publication No. 2009-521892
Patent Document 2: Japanese Laid-open Patent Publication No. 2008-187551
non-Patent Document 1: 3GPP TS 36.300 V8.3.0 non-Patent Document 2: 3GPP TS 36.321 V8.7.0
non-Patent Document 3: 3GPP TS 36.211 V8.6.0
non-Patent Document 4: 3GPP TS 36.212 V8.3.0
non-Patent Document 5: 3GPP TS 36.213 V8.6.0
non-Patent Document 6: 3GPP TS 36.331 V8.5.0

All of the above methods described as methods in which terminal devices having priority are connected to a base station preferentially involve problems. According to the method in which a base station judges whether each terminal device is a terminal device having priority after RRC connection, even terminal devices having priority are permitted to establish RRC connections with a base station at only the same rate as terminal devices not having priority, leading to a situation where even terminal devices having priority are sometimes not permitted to establish connections to a base station when PRACH are congested. According to the method in which information for controlling accesses transmitted from a base station is used, terminal devices not having priority are not permitted to establish connections with a base station, with communication by users using terminal devices not having priority being ignored. The method in which terminal devices having priority and terminal devices not having priority use separate PRACHs is unable to utilize a bandwidth effectively.

Also, in the system in which request permission signals are preferentially returned to mobile terminals that have transmitted preamble signals including signatures specified by a base station, priority connections are only established with terminal devices that failed in an RRC connection. Accordingly, even terminal devices having priority are permitted to establish connections preferentially only after failing in an RRC connection.

As described above, methods that have been proposed today sometimes lead to a situation where it is not easy for even terminal devices having priority to establish connections with a base station.

It is an object of the present invention to make connection establishment easy for a terminal device for which it is desired that a connection be established with a base station preferentially.

### SUMMARY

According to an aspect of the embodiments, in a wireless communication system, there are a first terminal device and a second terminal device covered by a base station. The first terminal device transmits a first preamble signal representing a first value to the base station. The second terminal device transmits a second preamble signal representing a second value to the base station. The base station identifies the first value and the second value when the base station has received the first preamble signal and the second preamble signal. The base station compares a threshold with the first value, and also compares the threshold with the second value. The base station gives priority to an establishment of a connection with the first terminal device over establishment of a connection with the second terminal device when the first value is greater than the threshold and the second value is equal to or smaller than the threshold.

It is made easier to establish a connection with a base station for a terminal device for which it is desired that a connection be established with a base station preferentially.

### BRIEF DESCRIPTION OF DRAWINGS

FIG. 1 illustrates an example of preamble signals received by a base station according to an embodiment.
FIG. 2 explains an example of a configuration of a base station.
FIG. 3 illustrates examples of preamble index tables.
FIG. 4 explains an example of a configuration of a terminal device.
FIG. 5 illustrates an example of information elements included in an SIB.
FIG. 6 illustrates an example of a root sequence number table.
FIG. 7 illustrates an example of a cyclic shift table.
FIG. 8 illustrates an example of cyclic shifting.
FIG. 9 is a flowchart explaining an example of operations of a base station.
FIG. 10 illustrates an example of a format of a sub header of a RACH response message.
FIG. 11 is a sequence diagram explaining an example of transmission and reception of messages between a base station and a terminal device.

### DESCRIPTION OF EMBODIMENTS

Hereinafter, detailed explanations will be given for the embodiments by referring to the drawings. In the explanations below, a terminal device that is connected to a base station 10 preferentially even when congestion has occurred is referred to as a "priority terminal device". Priority terminal devices may be terminal devices used by, for example, policemen, fire fighters, ambulance crews, etc. A terminal device that is not a priority terminal device may also be referred to as a "non-priority terminal device".

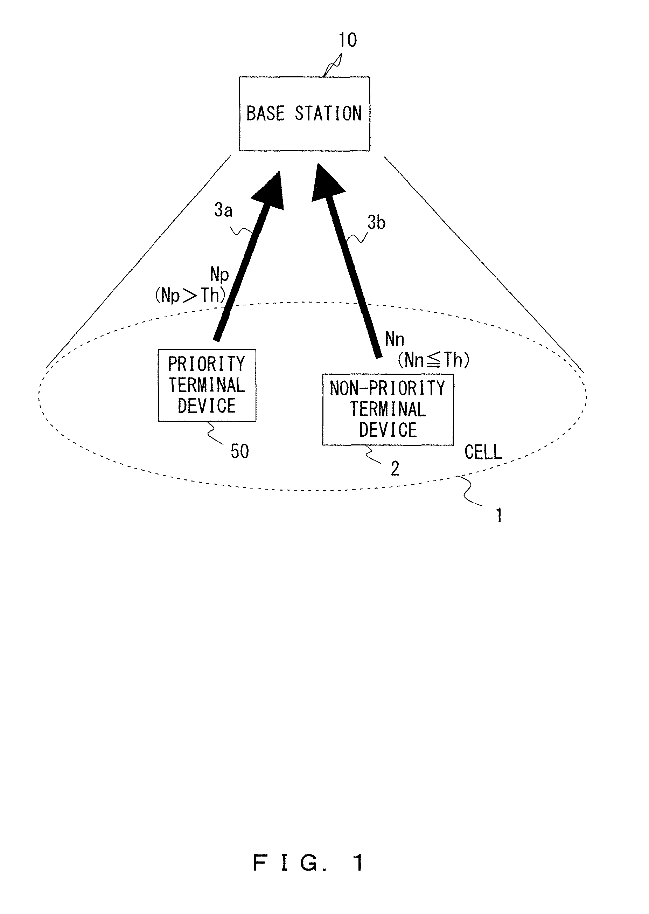

FIG. 1 illustrates an example of preamble signals received by the base station 10 according to an embodiment. The base station 10 covers a cell 1. There is a non-priority terminal device 2 and a terminal device 50 that is a priority terminal device in the cell 1. Note that "terminal device" in the explanations below is intended to mean the terminal device 50 as a priority terminal device.

As illustrated in FIG. 1, each of the terminal device 50 and the non-priority terminal device 2 transmits a preamble signal 3 (3a and 3b) to the base station 10. A preamble signal is the first signal that the terminal device 50 or the non-priority terminal device 2 transmits to the base station 10 when they request to start communication with the base station 10. Also, the preamble signal 3 uniquely corresponds to a preamble index. For example, the value of the preamble index corresponding to the preamble signal 3a transmitted from the terminal device 50 to the base station 10 is Np. In this example, Np is assumed to be greater than the threshold Th. The non-priority terminal device 2 generates the preamble signal 3b having Nn as a preamble index, and transmits it to the base station 10. Nn is assumed to be a number equal to or smaller than threshold Th. Also, the non-priority terminal device 2 is set not to generate the preamble signal 3 that corresponds to a preamble index of a value greater than threshold Th. In other words, threshold Th is equal to or greater than the greatest value among values of preamble indexes that the non-priority terminal device 2 uses for generating preambles. According to, for example, LTE, values of preamble indexes are in the range from 1 through 64, and thus threshold Th is a value equal to or greater than 64. The base station 10 and the terminal device 50 store threshold Th beforehand.

The base station 10 identifies the corresponding preamble index value for each of the received preamble signals 3. Next, the base station 10 determines a terminal device that it will permit to connect. The base station 10 preferentially permits connection by a terminal device that has transmitted the preamble signal 3 corresponding to a preamble index of a value greater than threshold Th. For example, the preamble index corresponding to the preamble signal 3a transmitted from the terminal device 50 is greater than threshold Th, and accordingly the terminal device 50 is permitted to connect preferentially over the non-priority terminal device 2. The base station 10 broadcasts, to terminal devices in the cell 1, a permission message including information identifying a terminal device that will be permitted to connect. For this broadcasting, when the terminal device 50 is to be permitted to connect, the base station 10 makes the permission message include a value obtained by subtracting threshold Th from the preamble index.

The terminal device 50 compares a value obtained by adding threshold Th to the value included in the permission message with the preamble index value corresponding to the preamble signal 3 transmitted by the terminal device 50. When they are equal to each other, the terminal device 50 judges that connection establishment has been permitted between the terminal device 50 and the base station 10, and transmits a control message to the base station 10 so as to establish communication between the terminal device 50 and the base station 10.

As described above, the base station 10 compares a threshold with a preamble index value represented by the preamble signal 3 so as to recognize a terminal device for which it is desired that a connection be established preferentially. In other words, the base station 10 is capable of recognizing a terminal device for which a connection is to be established preferentially by confirming a signal transmitted from the terminal device 50 through a RACH. Accordingly, the terminal device 50 is selected by the base station 10 as a target to be connected preferentially since the first preamble signal transmitted from the terminal device 50 is processed. This means that the terminal device 50 is selected as a target to be connected preferentially before an RRC connection with the base station 10 fails. Accordingly, it is easy for the terminal device 50 to establish a connection with the base station 10 even when a RACH is congested.

Further, the PRACH of the terminal device 50 and the PRACH of the non-priority terminal device 2 may use the same band, making it possible to save bandwidth. Also, in some cases, the non-priority terminal device 2 may establish a connection with the base station 10 when there are redundancies in bandwidth. When the base station 10 permits the non-priority terminal device 2 to connect, the base station 10 makes a permission message include a preamble index that corresponds to the preamble signal 3 transmitted from the terminal device that is to obtain the connection permission. The non-priority terminal device 2 compares the value included in the permission message with the preamble index transmitted to the base station 10, and when they are equal to each other, a connection is established between the non-priority terminal device 2 and the base station 10.

Threshold Th is a value set in accordance with implementation conditions, and is set in accordance with, for example, specifications of permission messages transmitted from the base station 10. There is a case, for example, where the greatest value that may be represented by a bit length used for reporting a preamble index value in a permission message is set to threshold Th. It is assumed as an example that six bits are used for reporting a preamble index value of a permission message. In such a case, values other than 1 through 64 are not represented by the prepared bit length, and accordingly the threshold Th is set to 64. In the explanations below, a case is described where threshold Th is the greatest value that may be represented by a bit length used for a permission message for reporting a preamble index value.

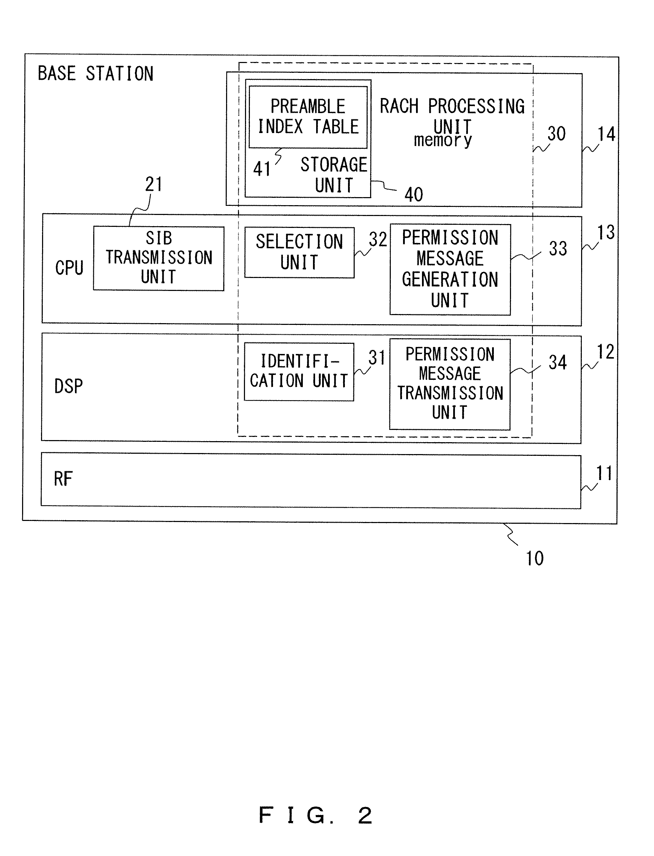

FIG. 2 explains an example of a configuration of the base station 10. The base station 10 includes a radio frequency (RF) circuit 11, a digital signal processor (DSP) 12, a central processing unit (CPU) 13 , and a memory 14. The DSP 12, the CPU 13, and the memory 14 operate as a RACH processing unit 30. The RACH processing unit 30 includes an identification unit 31, a selection unit 32, a permission message generation unit 33, a permission message transmission unit 34, and a storage unit 40. The DSP 12 operates as the identification unit 31 and the permission message transmission unit 34. The CPU 13 operates as a System Information Base (SIB) transmission unit 21, a selection unit 32, and a permission message generation unit 33. The memory 14 operates as the storage unit 40. Also, the storage unit 40 stores a preamble index table 41. The RF circuit 11 performs a process of multiplying a carrier wave by a signal that has performed a transmission process by the SIB transmission unit 21 or the permission message transmission unit 34, and transmits the resultant signal to the terminal device 50 or the non-priority terminal device 2 in the cell 1. Also, the RF circuit 11 eliminates the carrier wave from the signal received from the terminal device 50 or the non-priority terminal device 2.

The SIB transmission unit 21 transmits an SIB generated by the base station 10 to terminal devices in the cell 1. When the terminal device 50 and the non-priority terminal device 2 are in the cell 1, an SIB is broadcast to both the terminal device 50 and the non-priority terminal device 2. An SIB includes information used by the non-priority terminal device 2 or the terminal device 50 for establishing connections with the base station 10. Examples of information related to a preamble include information used for generating preamble signals, assignment information of PRACHs, and the like. Assignment information of PRACHs includes information used for determining the cyclic shift, the waveform used for representing a preamble index, and the like. Also, in information on generation of preamble signals, a timing at which the terminal device 50 or the non-priority terminal device 2 confirms a permission message is specified.

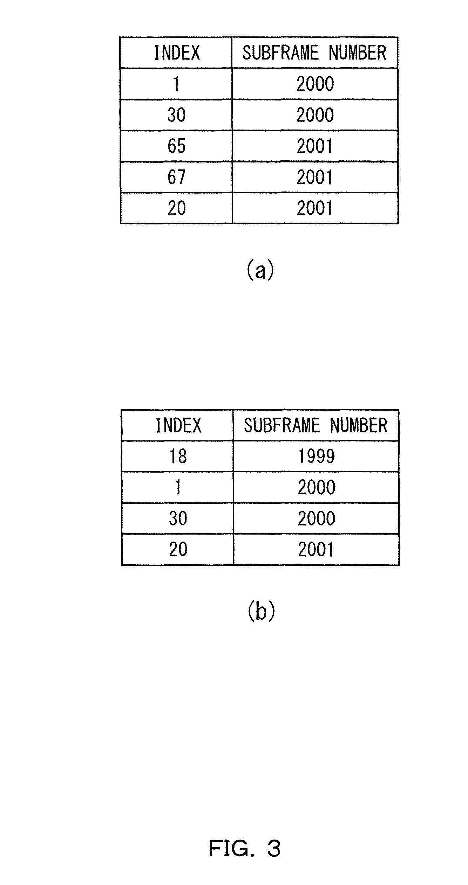

The identification unit 31 identifies a preamble index represented by each of the preamble signals 3 received from the terminal device 50 or the non-priority terminal device 2. A method of identifying preamble indexes will be explained later in detail. The identification unit 31 makes identified preamble indexes correspond to the numbers of subframes to which are transmitted the preamble signals 3, and records the resultant information in the preamble index table 41. FIG. 3 (a) illustrates an example of the preamble index table 41. Note that FIG. 3 (a) and FIG. 3 (b) illustrate examples of the preamble index table 41, and the preamble index table 41 may be modified so as to respond to implementation conditions so that it stores information other than preamble indexes and subframe numbers, in addition to such information.

The selection unit 32 compares preamble indexes included in the preamble index table 41 with threshold Th so as to confirm whether the base station 10 has received a preamble signal transmitted from the terminal device 50. When the preamble signal 3 transmitted by the terminal device 50 has received, the selection unit 32 permits the terminal device 50 to connect preferentially over the non-priority terminal device 2. Operations of the selection unit 32 will be explained later in detail. The selection unit 32 reports to the permission message generation unit 33 the value of the preamble index transmitted from the terminal device that will be permitted to connect.

The permission message generation unit 33 uses a preamble index reported from the selection unit 32 so as to generate a permission message. For example, a permission message may be a RACH response message. When the value of a preamble index reported from the selection unit 32 is greater than a threshold, the permission message generation unit 33 may report the difference between the value of the reported preamble index and the threshold by using a permission message. For example, it is assumed that threshold Th is 64 and the preamble index reported from the terminal device 50 that will be permitted to connect is 70. In such a case, the permission message generation unit 33 generates a permission message for reporting the difference between the preamble index and the threshold, i.e., six (6). The permission message generation unit 33 outputs the generated permission message to the permission message transmission unit 34. The permission message transmission unit 34 transmits the permission message to the terminal device 50 or the non-priority terminal device 2 in the cell 1.

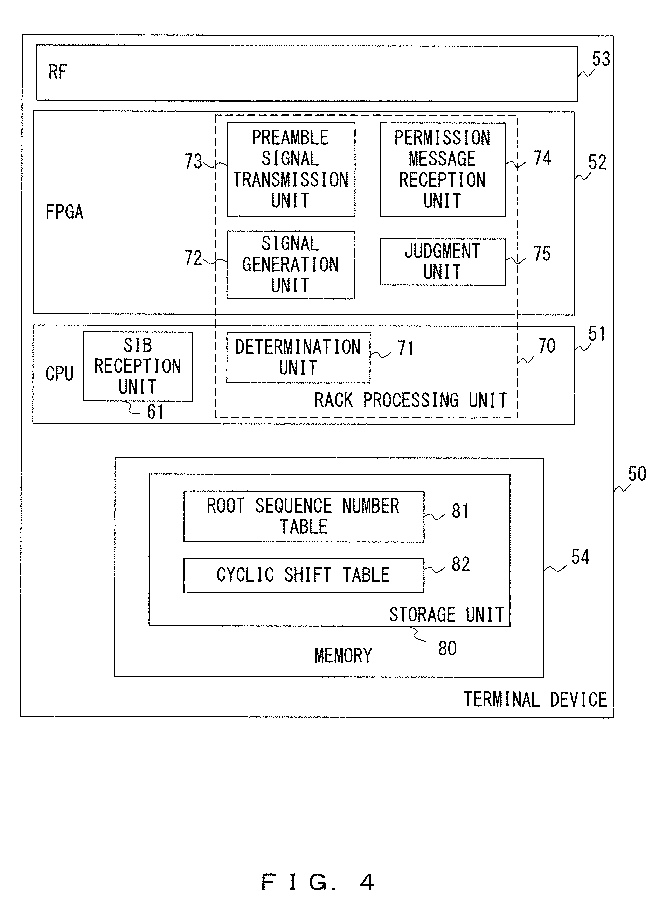

FIG. 4 explains an example of a configuration of the terminal device 50. The terminal device 50 includes a CPU 51, a Field Programmable Gate Array (FPGA) 52, an RF circuit 53, and a memory 54. The CPU 51 and the FPGA 52 operate as a RACH processing unit 70. The RACH processing unit 70 operates as a determination unit 71, a signal generation unit 72, a preamble signal transmission unit 73, a permission message reception unit 74, and a judgment unit 75. The CPU 51 operates as an SIB reception unit 61 and a determination unit 71. The FPGA 52 operates as the signal generation unit 72, the preamble signal transmission unit 73, the permission message reception unit 74, and the judgment unit 75. The memory 54 operates as a storage unit 80. The storage unit 80 includes a root sequence number table 81 and a cyclic shift table 82. The RF circuit 53 eliminates carrier waves from signals received from the base station 10. Further, the RF circuit 53 performs processes of multiplying carrier waves by the signals that have performed a transmission process by the preamble signal transmission unit 73, and transmits the obtained signal to the base station 10.

The SIB reception unit 61 obtains the SIB transmitted from the base station 10, and identifies information included in the SIB. The SIB reception unit 61 reports to the signal generation unit 72 information used for generating a preamble. Further, the SIB reception unit 61 reports information included in the SIB in response to requests from the permission message reception unit 74, etc.

The determination unit 71 determines a preamble index. The determination unit 71 is capable of generating random numbers. A method of determining a preamble index will be explained later. The determination unit 71 reports the determined preamble index to the signal generation unit 72 and the judgment unit 75.

The signal generation unit 72 generates a preamble signal 3 that corresponds to the determination unit 71. Upon this generation, the signal generation unit 72 obtains information used for generating a preamble signal from the SIB reception unit 61. Further, the signal generation unit 72 refers to the root sequence number table 81 and the cyclic shift table 82. A method of generating the preamble signal 3 will be explained later in detail. The signal generation unit 72 outputs the generated preamble signal 3 to the preamble signal transmission unit 73. The preamble signal transmission unit 73 transmits the preamble signal 3 to the base station 10.

The permission message reception unit 74 identifies information included in the permission message received from the base station 10. For example, the permission message reception unit 74 obtains the value reported in the permission message, and outputs the value to the judgment unit 75. The judgment unit 75 compares the value obtained by adding threshold Th to the value input from the permission message reception unit 74 with the preamble index value reported from the determination unit 71. When they are equal, the judgment unit 75 judges that a connection has been permitted between the terminal device 50 and the base station 10. When a connection has been permitted, the terminal device 50 transmits to the base station 10 a control signal for establishing the connection.

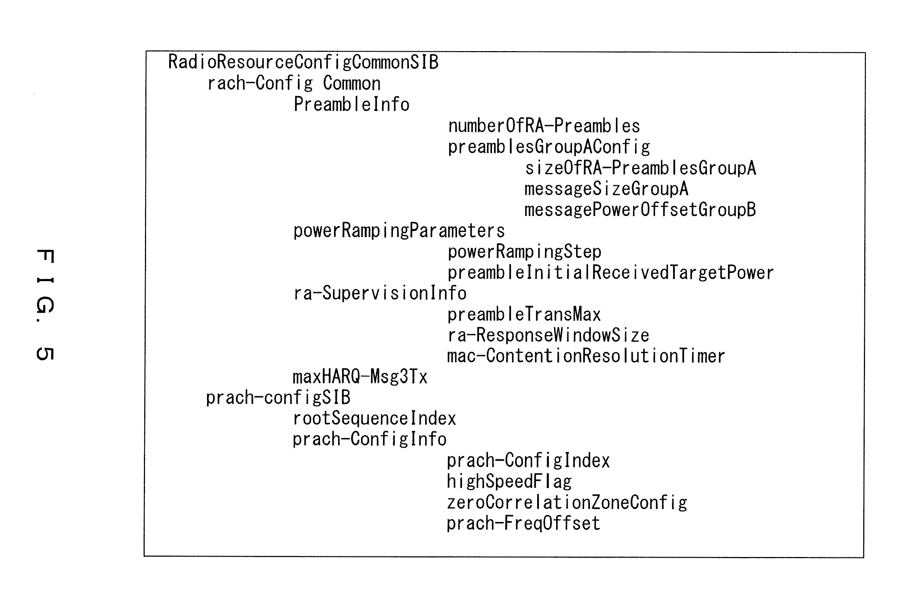

Hereinafter, detailed explanations will be given for an example of operations performed when the terminal device 50 having received an SIB generates the preamble signal 3. FIG. 5 illustrates an example of information elements included in an SIB. Although FIG. 5 illustrates information elements related to a preamble, an SIB includes other information used by the terminal device 50 for performing communication with the base station 10 such as information related to the transmission power. In this example, rach-Config Common is information used for generating a preamble signal, and prach-config SIB is assignment information of a PRACH. The SIB reception unit 61 reports to the signal generation unit 72 the values of rootSequenceIndex, zeroCorrelationZoneConfig, and the like included in the PRACH assignment information.

The determination unit 71 determines a preamble index. The determination unit 71 generate a random number equal to or greater than 1 and equal to or smaller than threshold Th, and adds the obtained random number to threshold Th so as to use the resultant value as a preamble index. For example, when threshold Th is 64, the determination unit 71 generates a random number in a range between 1 through 64, and adds 64 to the generated random number so as to generate a random number greater than threshold Th. Accordingly, when the value of the random number generated by the determination unit 71 is 1, the value of the generated preamble index is 65. The purpose of the determination unit 71 using a random number for generating a preamble index is to reduce the possibility of collisions between signals having the same preamble signals generated by different terminal devices 50. The determination unit 71 reports the generated random number to the signal generation unit 72 and the judgment unit 75.

The signal generation unit 72 uses the value of rootSequenceIndex so as to determine on the basis of the root sequence number table 81 a waveform for generating a preamble signal representing the preamble index input from the determination unit 71.

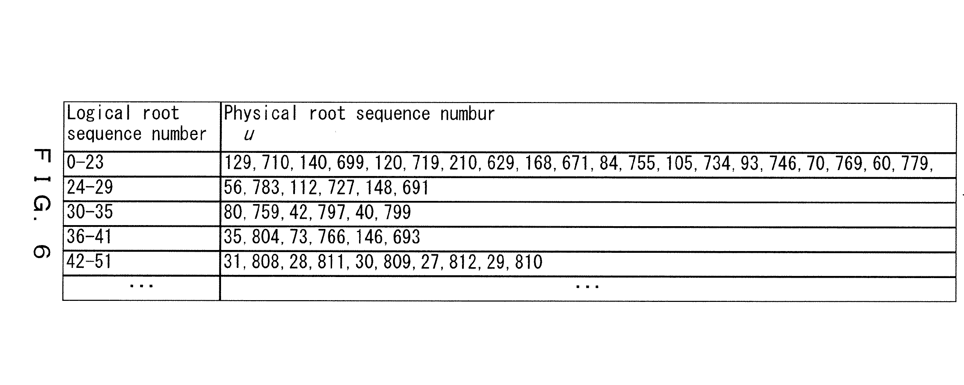

FIG. 6 illustrates an example of the root sequence number table 81. The root sequence number table 81 records logical root sequence numbers and physical root sequence numbers (u) in an associated manner. A rootSequenceIndex included in an SIB specifies a logical root sequence number. A logical root sequence number has the same value as the value specified by rootSequenceIndex. When, for example, one value is specified from among 0 through 23 by rootSequenceIndex, logical root sequence numbers are also in a range from 0 through 23. The group of physical root sequence numbers associated with 0 through 23 as logical root sequence numbers are recorded in the top record of the root sequence number table 81 in the example illustrated in FIG. 6. Accordingly, when one value is specified from 0 through 23 by rootSequenceIndex, the signal generation unit 72 selects a physical root sequence number used for generating the preamble signal 3 from the top record of the root sequence number table 81. Similarly, when rootSequenceIndex is in a range of 24 through 29, a physical root sequence number is selected from the second record of the root sequence number table 81 of FIG. 6, and when rootSequenceIndex is in a range of 30 through 35, a physical root sequence number is selected from the third record of FIG. 6. The signal generation unit 72 may generate as many preamble signals 3 as the number of times of cyclic shifting for each physical root sequence number.

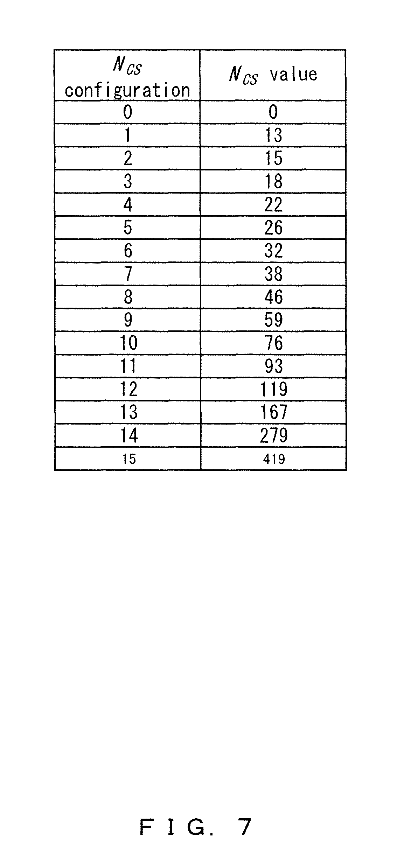

The signal generation unit 72 uses the value of zeroCorrelationZoneConfig and the cyclic shift table 82 so as to obtain the number of times of cyclic shifting. FIG. 7 illustrates an example of the cyclic shift table 82. The cyclic shift table 82 records Ncs Configurations and Ncs values are recorded in an associated manner. An Ncs Configuration is the same value as that reported by zeroCorrelationZoneConfig. An Ncs value represents a time period over which the waveform of a signal is shifted when a cyclic shift value has been incremented by one. The signal generation unit 72 obtains an Ncs value by using the cyclic shift table 82 (FIG. 7). When, for example, 8 is specified as zeroCorrelationZoneConfig, the Ncs Configuration is 8. The signal generation unit 72 recognizes that the Ncs value is 46Ts by referring to the cyclic shift table 82. In other words, the signal generation unit 72 recognizes that the waveform of a signal shifts by 46Ts when the cyclic shift value has been incremented by one. In this example, Ts represents the time period of 1/(15000×2048) second.

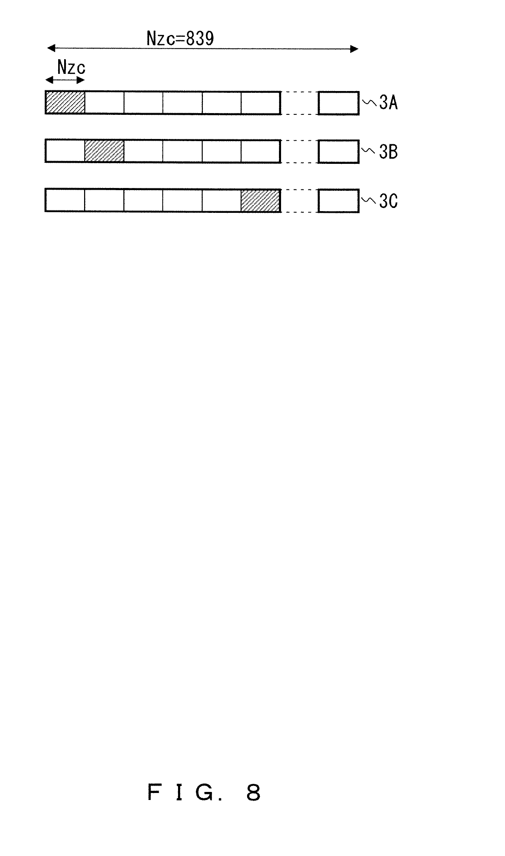

FIG. 8 explains an example of cyclic shifting. In the example of FIG. 8, a case is illustrated in which the preamble signal 3 has a time period of 839Ts. As illustrated in FIG. 8, the length of the preamble signal 3 is prescribed, and accordingly an integer obtained by truncating numbers after the decimal point of the value obtained by dividing the length of a preamble signal by the Ncs value is the number of times of cyclic shifting. When, for example, the Ncs value is 46Ts, the number of times of cyclic shifting is 18 because 839/46=18.23··. Accordingly, when the Ncs value is 46Ts, the signal generation unit 72 may represent eighteen types of preamble indexes by using a waveform specified by one physical root sequence number. FIG. 8 illustrates the preamble signals 3 generated by using the same physical root sequence numbers. The preamble signal 3A illustrates the preamble signal 3 that has not been cyclically shifted. The preamble signal 3B illustrates the preamble signal 3 that has been cyclically shifted by the Ncs value. The waveform of 0Ts through 45Ts in the preamble signal 3A corresponds to the waveform of 46Ts through 91Ts in the preamble signal 3B having one as the number of times of cyclic shifting. Similarly, in the preamble signal 3 having the cyclic shifting value of 6, the waveform is shifted as illustrated in the preamble signal 3C.

The signal generation unit 72 uses the waveform specified by the physical root sequence number and the cyclic shifting so as to generate the preamble signal 3 representing the preamble index. The signal generation unit 72 selects a physical root sequence number that specifies the waveform used for representing the preamble index from the group of physical root sequence numbers associated with the logical root sequence number of the same value as that of rootSequenceIndex. When it is assumed that a value obtained by rounding up the numbers after the decimal point of a value obtained by dividing the preamble index value by the number of times of cyclic shifting is x, the signal generation unit 72 uses the waveform specified by the x-th physical root sequence number corresponding to the logical root sequence number. For example, when the preamble index is 1, the signal generation unit 72 treats the waveform corresponding to the first physical root sequence number in the record specified by rootSequenceIndex as the preamble signal 3. When rootSequenceIndex is 3, the logical root sequence number is 3, and accordingly the signal generation unit 72 refers to the first record of the root sequence number table 81 (illustrated in FIG. 6). The signal generation unit 72 treats as the preamble signal 3 the waveform having a physical root sequence number of 129 when the preamble index is 1.

The signal generation unit 72 cyclically shifts the waveform specified by a physical root sequence number as the preamble index increases. When a reminder left when dividing the value of a preamble index by the number of times of cyclic shifting is assumed to be y, the signal generation unit 72 treats y as a cyclic shift value. In other words, the signal generation unit 72 treats as the preamble signal 3 the waveform obtained by cyclically shifting, by the length of the Ncs value multiplied by y, the waveform specified by the selected physical root sequence number. Accordingly, the relationship between physical root sequence numbers used for representing preamble index values and cyclic shifting is as below, where u represents a physical root sequence number.
PremableIndex=1: u=129, cyclic shift value=0
PremableIndex=2: u=129, cyclic shift value=1
PremableIndex=3: u=129, cyclic shift value=2
PremableIndex=19: u=129, cyclic shift value=18
PremableIndex=20: u=710, cyclic shift value=0
PremableIndex=39: u=140, cyclic shift value=0
PremableIndex=58: u=669, cyclic shift value=0
PremableIndex=65: u=669, cyclic shift value=7
PremableIndex=66: u=669, cyclic shift value=8
PremableIndex=67: u=669, cyclic shift value=9

In the above method, the signal generation unit 72 generates a signal representing a preamble index reported by the determination unit 71. When, for example, a preamble index is 65, the signal generation unit 72 shifts the waveform having a physical root sequence number of 669 by 322Ts (46Ts×7 times) so as to generate the preamble signal 3. The signal generation unit 72 outputs the generated preamble signal 3 to the preamble signal transmission unit 73. The preamble signal transmission unit 73 transmits the input signal to the base station 10.

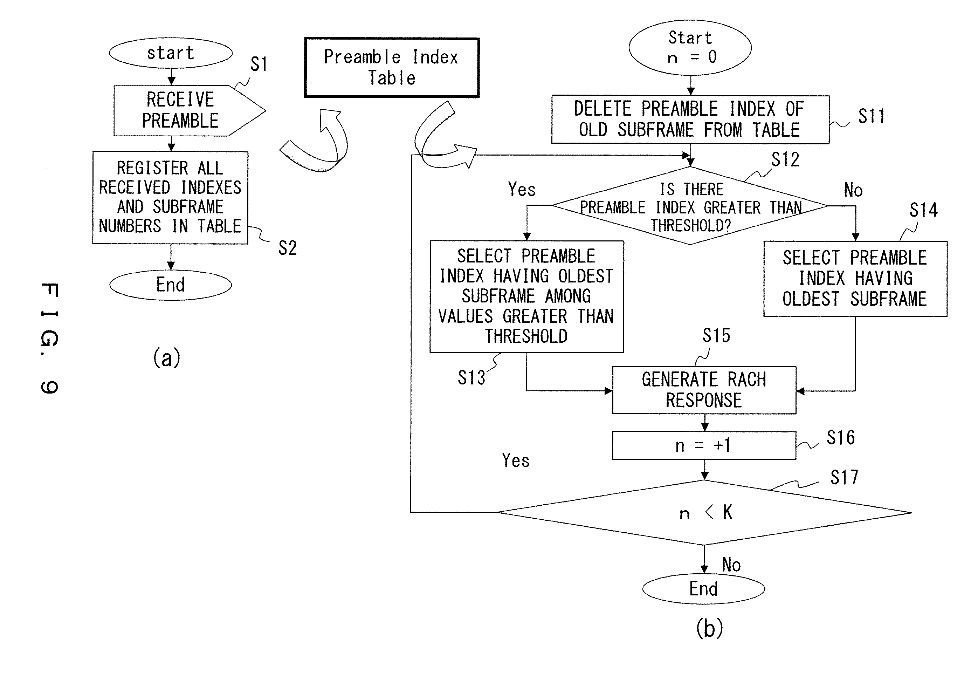

FIG. 9 is a flowchart explaining an example of operations of the base station 10. Referring to FIG. 9, Explanations will be given for an example of operations of the base station 10 after it has received the preamble signal 3. Note that the base station 10 holds the value of threshold Th beforehand as described above. In the example illustrated in FIG. 9, a permission message is a RACH response message. Also, variable n and constant K are used for generating a permission message. Constant K represents the number of RACH responses transmitted in one subframe. Variable n is used for counting the number of generated RACH responses.

When the SIB transmission unit 21 has transmitted an SIB, the identification unit 31 predicts the waveform of a preamble signal to be received for each preamble index. This prediction is based on the physical root sequence number corresponding to the waveform specified by the transmitted SIB and the amount of cyclic shifting. Upon making this prediction, the identification unit 31 also predicts the waveform of the preamble signal 3 corresponding to a preamble index having a value greater than threshold Th. When the base station 10 has received the preamble signal 3, the identification unit 31 performs matching between the predicted waveform and the received preamble signal 3 so as to obtain the preamble index value that corresponds to the preamble signal 3 (step S1). The identification unit 31 associates the obtained preamble index value with a subframe number, and records them in the preamble index table 41 (FIG. 3) (step S2). Thereby, the identification unit 31 and the selection unit 32 may recognize the order in which preamble indexes were received by the base station 10 by confirming subframe numbers on the preamble index table 41.

When generation of permission messages for preamble signals has started, the permission message generation unit 33 sets variable n to zero. Also, the selection unit 32 deletes data that has been associated with subframe numbers that are smaller than the greatest subframe number by a difference of a certain value or greater, among pieces of data included in the preamble index table 41 (step S11). For example, the selection unit 32 deletes pieces of data associated with subframe numbers smaller than the greatest subframe number recorded in the preamble index table 41 by a difference of ten or greater. By this process, old pieces of data are deleted, and only data that has been received relating to the preamble signals 3 by the base station 10 within a prescribed period of time after the present time is recorded in the preamble index table 41.

Next, the selection unit 32 confirms whether or not a preamble index value greater than threshold Th is recorded in the preamble index table 41 (step S12). When a preamble index value greater than threshold Th is recorded in the preamble index table 41, the selection unit 32 preferentially selects a preamble index value greater than threshold Th (Yes in step S12 and step S13). When a plurality of preamble index values greater than threshold Th are recorded, the selection unit 32 preferentially selects the preamble index value that was received by the base station 10 earliest. Also, when there are a plurality of preamble indexes that are associated with the same subframe number, the selection unit 32 selects only one of those preamble indexes that are to be selected preferentially. When, for example, threshold Th is 64 and the selection unit 32 has referred to the preamble index table 41 illustrated in FIG. 3(a), the selection unit 32 selects one of the preamble indexes 65 and 67 associated with subframe number 2001. In this example, it is assumed that the selection unit 32 selected the preamble index 65.

When a preamble index value greater than threshold Th is not recorded in the preamble index table 41, the selection unit 32 selects the preamble index having the smallest subframe number (No in step S12 and step S14). It is assumed as an example that the preamble index table 41 has been updated in step S11 as illustrated in FIG. 3(b). In such a case, the selection unit 32 judges in step S12 that a preamble index greater than a threshold is not recorded in the preamble index table 41. Accordingly, the selection unit 32 selects a preamble index 18 having subframe number 1999. When the selection of preamble index is terminated, the selection unit 32 deletes the selected preamble index value from the preamble index table 41, and reports to the permission message generation unit 33.

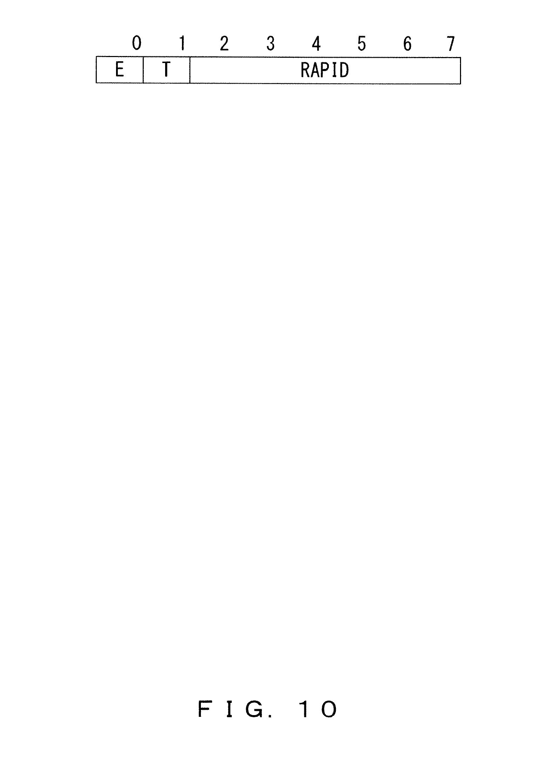

The permission message generation unit 33 generates a RACH response message including a Random Access Preamble Identifier (RAPID). A RAPID records a preamble index corresponding to the preamble signal 3 transmitted from a terminal device permitted by the base station 10 to connect. FIG. 10 illustrates an example of a format of a sub header of a RACH response message. "E" (extended bit) indicates whether or not there is information following the RAPID. Because the sub header in this example does not include information following the RAPID, the bit is set to zero. "T" indicates whether or not the sub header includes a random access ID, and "1" is set for a message including a RAPID. As illustrated in FIG. 10, the RAPID included in a RACH response message is of six bits, and accordingly values from 1 through 64 are recorded in a RAPID. Because threshold Th is the maximum value that may be represented by the number of bits used for storing a RAPID, preamble indexes greater than threshold Th are not recorded in a RAPID. Accordingly, the permission message generation unit 33 compares the preamble index value reported from the selection unit 32 with threshold Th, determines the value of the RAPID in accordance with the comparison result, and generates a RACH response message (step S15). In other words, when a selected preamble index is greater than threshold Th, the permission message generation unit 33 stores, in the RAPID, a value obtained by subtracting threshold Th from the preamble index value. It is assumed as an example that the preamble index value selected in step S13 is 65, greater than threshold Th, 64. In such a case, the permission message generation unit 33 generates a RACH response message having as a RAPID a value obtained by subtracting threshold Th from a preamble index value (65-64=1) . When a selected preamble index is smaller than threshold Th as described in step S14, the permission message generation unit 33 generates a RACH response message including a preamble index.

The permission message generation unit 33 outputs the generated RACH response message to the permission message transmission unit 34. Also, the permission message generation unit 33 increments variable n by one (step S16). Further, the permission message generation unit 33 compares variable n with constant K (step S17). These processes of steps S12 through S17 are repeated until variable n becomes equal to or greater than constant K.

The permission message transmission unit 34 transmits the RACH response message input from the permission message generation unit 33, to the terminal device 50 and the non-priority terminal device 2 in the cell 1. Upon this transmission, the permission message transmission unit 34 uses the number of the subframe that includes the preamble signal 3, and the RACH response window size, so as to transmit the message at a timing at which a terminal device to be permitted to connect may receive the RACH response message.

Next, explanations will be given for operations performed when the terminal device 50 has received a RACH response message. When the terminal device 50 has received a RACH response message, the permission message reception unit 74 obtains the value specified as the RAPID. The permission message reception unit 74 outputs the value specified as the RAPID to the judgment unit 75. The permission message reception unit 74 also obtains information related to bandwidth assignment or the like from the RACH response message appropriately.

The judgment unit 75 compares a value obtained by adding threshold Th to the value specified as the RAPID with the preamble index represented by the preamble signal 3 transmitted by the terminal device 50. When they are equal, the judgment unit 75 judges that the terminal device 50 has been given permission to connect with the base station 10. Accordingly, the terminal device 50 transmits a connection request message to the base station 10 by using the band specified by the information that the permission message reception unit 74 obtained.

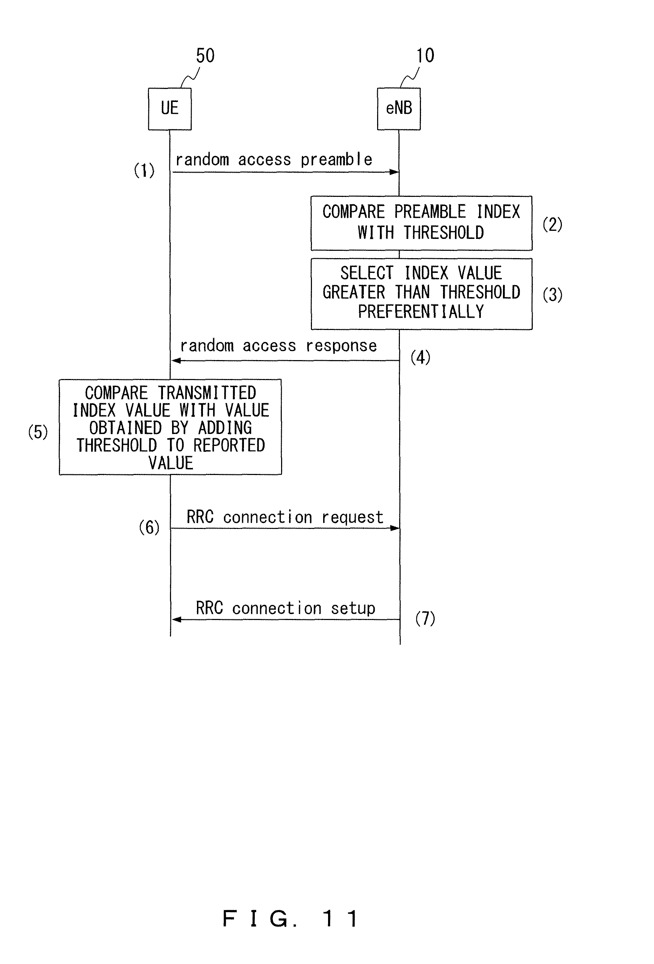

FIG. 11 is a sequence diagram explaining an example of transmission and reception of messages between the base station 10 and the terminal device 50. By referring to FIG. 11, operations performed by the terminal device 50 and the base station 10 will be described over the course of time.
(1) : The terminal device 50 transmits the preamble signal 3 to the base station 10 through a RACH.
(2): The identification unit 31 included in the base station 10 obtains the preamble index represented by the preamble signal 3 so as to record the index in the preamble index table 41. Further, the selection unit 32 compares the obtained preamble index with threshold Th.
(3): The selection unit 32 preferentially selects a preamble index greater than threshold Th.
(4) : When the preamble index selected by the selection unit 32 is greater than the threshold Th, the base station 10 broadcasts to terminal devices in the cell 1 a permission message reporting the difference between the preamble index and threshold Th.
(5): The terminal device 50 compares a value obtained by adding threshold Th to the value reported in the permission message with the preamble index value represented by the preamble signal 3 transmitted by the terminal device 50. When they are equal, the terminal device 50 judges that establishment of a connection with the base station 10 has been permitted.
(6): When it has been judged that a connection has been permitted, the terminal device 50 transmits an RRC connection request message to the base station 10.
(7): The base station 10 transmits an RRC connection set up message to the terminal device 50. Communication will be continued between the terminal device 50 and the base station 10 also after this transmission.

As described above, according to the present embodiment, the terminal device 50, which is a priority terminal device, generates the preamble signal 3 by using the value of a preamble index that is not used by the non-priority terminal device 2, and transmits the preamble signal 3 to the base station 10. Accordingly, the base station 10 may recognize a priority terminal device by comparing the preamble index value represented by the preamble signal 3 with the threshold so that the base station 10 may permit a priority terminal device preferentially to connect when responding to the preamble signal. Accordingly, it is easy for the terminal device 50 as a priority terminal device to establish a connection with the base station 10.

Note that when a preamble index used by the non-priority terminal device 2 is equal to the value specified as a RAPID, there is a possibility of collision between an RRC connection request message transmitted from the terminal device 50 and a message transmitted from the non-priority terminal device 2. In such a case, the terminal device 50 transmits a preamble signal again. When a preamble signal is to be transmitted a second time or subsequent times, the determination unit 71 generates a new preamble index, and in such cases too, the determination unit 71 uses a value greater than threshold Th for a preamble index. Accordingly, the preamble signal 3 that is transmitted again is also selected preferentially by the base station 10, and therefore there is a higher possibility for the terminal device 50 to be permitted to connect with the base station 10 than for the non-priority terminal device 2.

Note that embodiments are not limited to the above described examples, and various modifications are allowed. For example, the determination unit 71 may be set beforehand to generate a random number equal to or greater than threshold Th.

## Claims

1. A wireless communication system in which a first terminal device and a second terminal device are in a cell covered by a base station, wherein:
the first terminal device transmits a first preamble signal representing a first value to the base station;
the second terminal device transmits a second preamble signal representing a second value to the base station;
the base station identifies the first value and the second value when the base station has received the first preamble signal and the second preamble signal;
the base station compares a threshold with the first value, and also compares the threshold with the second value; and
the base station gives priority to establishment of a connection with the first terminal device over establishment of a connection with the second terminal device when the first value is greater than the threshold and the second value is equal to or smaller than the threshold.

2. The communication system according to claim 1, wherein:
the base station transmits, to the first terminal device and the second terminal device, a permission message including a difference between the first value and the threshold used for identifying a value represented by a preamble signal transmitted from a target terminal device that is to be permitted by the base station to connect; and
the first terminal device transmits to the base station a control message for establishing a connection with the base station when the first terminal device has confirmed that a sum of the difference reported in the permission message and the threshold is equal to the first value.

3. The communication system according to claim 2, wherein:
the threshold is a greatest value that is capable of expression by a number of bits used for reporting a value represented by a preamble signal transmitted from the target terminal device in the permission message.

4. A base station, comprising:
a reception unit configured to receive a preamble signal from a terminal device;
an identification unit configured to identify a value represented by the preamble signal;
a storage unit configured to store the identified value;
a selection unit configured to select a value in such a manner that a value greater than the threshold is selected preferentially, and to delete the selected value from the storage unit, from among values stored in the storage unit;
a message generation unit configured to generate a permission message that permits a connection with a terminal device that has transmitted a preamble signal representing the selected value; and
a transmission unit configured to transmit the permission message.

5. The base station according to claim 4, wherein:
the message generation unit:
makes the permission message include the difference between the selected value and the threshold when the selected value is greater than the threshold; and
makes the permission message include the selected value when the selected value is equal to or smaller than the threshold.

6. The base station according to claim 5, wherein:
the threshold is a greatest value that is capable of expression by a number of bits used in the permission message for reporting a value represented by a preamble signal transmitted from the target terminal device.

7. A communication device, comprising:
a reception unit configured to receive a message from a base station;
a determination unit configured to determine a value greater than a threshold in order to generate a preamble signal that requests the base station to connect;
a signal generation unit configured to generate a preamble signal representing the determined value;
a transmission unit configured to transmit the generated preamble signal to the base station; and
a judgment unit configured to compare a sum of a value included in a permission message and the threshold with the determined value when the judgment unit has received the permission message reporting a value represented by a preamble received from a terminal device that is to be permitted by the base station to connect, and to judge that a connection has been permitted by the base station when the sum and the determined value are equal to each other.

8. A communication method, wherein:
in a cell in which there are a first terminal device and a second terminal device:
the first terminal device transmits a first preamble signal representing a first value to a base station that covers the cell;
the second terminal device transmits a second preamble signal representing a second value to the base station;
the base station identifies the first value and the second value when the base station has received the first preamble signal and the second preamble signal;
the base station compares a threshold with the first value, and also compares the threshold with the second value; and
the base station gives priority to establishment of a connection with the first terminal device over establishment of a connection with the second terminal device when the first value is greater than the threshold and the second value is equal to or smaller than the threshold.
